(19) Europäisches Patentamt / European Patent Office / Office européen des brevets

(11) **EP 2 322 399 B1**

(12) **EUROPEAN PATENT SPECIFICATION**

(45) Date of publication and mention
of the grant of the patent:
**08.07.2015 Bulletin 2015/28**

(51) Int Cl.:
*B60W 30/18* (2012.01)     *B60K 6/485* (2007.10)
*B60W 10/115* (2012.01)    *B60W 10/06* (2006.01)
*B60W 20/00* (2006.01)     *F16H 61/00* (2006.01)

(21) Application number: **10190935.6**

(22) Date of filing: **12.11.2010**

(54) **Drive source stop control device for vehicle**

Fahrzeug-Steuergerät für den Antriebsquellenstopp

Dispositif de contrôle automatique de l'arrêt du propulseur source pour véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.11.2009  JP 2009259356**

(43) Date of publication of application:
**18.05.2011  Bulletin 2011/20**

(73) Proprietor: **Honda Motor Co., Ltd.
Tokyo 107-8556 (JP)**

(72) Inventor: **Wakita, Kazuyoshi
Saitama 351-0193 (JP)**

(74) Representative: **Beder, Jens
Mitscherlich PartmbB
Patent- und Rechtsanwälte
Sonnenstraße 33
80331 München (DE)**

(56) References cited:
**US-A1- 2003 109 970     US-A1- 2004 029 677
US-A1- 2009 074 590**

**Description**

TECHNICAL FIELD

The present invention relates to a drive source stop control device for a vehicle provided with a mechanical oil pump and an electrical oil pump, and particularly, the present invention relates to a drive source stop control device for a vehicle, which causes a drive source such as an engine to stop under predetermined conditions and further causes the drive source to start again when predetermined conditions are met.

BACKGROUND

Heretofore, an engine stop control device for a vehicle is known. The engine stop control device can improve fuel economy of the vehicle by carrying out control (engine automatic stop control, or idling stop control) to stop an engine when the vehicle stops. In such a device, an electrical oil pump for supplying hydraulic oil to a transmission gear mechanism such as an automatic transmission when the engine stops is provided in addition to a mechanical oil pump driven by the engine.

As such a drive source stop control device for a vehicle, there has been proposed one that prohibits automatic stop control for an engine when it is detected whether an electrical oil pump becomes a failed state or not and the failed state is detected (for example, see Japanese Patent Application Publication No. 2000-45807 (hereinafter, referred to as "Patent Literature 1")), one that prohibits automatic stop control for an engine when an electrical oil pump becomes a deteriorated state (for example, see Japanese Patent Application Publication No. 2000-230442 (hereinafter, referred to as "Patent Literature 2")) and the like.

In the device disclosed in Patent Literature 1, it is determined whether execution of engine automatic stop control is permitted or prohibited on the basis of a charged state of a battery and a failed state of an electrical oil pump. However, even though there is no problem in the charged state of the battery and the electrical oil pump normally operates, other causes including, for example, abnormality (such as clogging and leak) of an oil passage route to a transmission gear mechanism and abnormality (fixation and the like) of each valve in a hydraulic circuit may create the case where necessary hydraulic pressure cannot normally be applied to a transmission gear mechanism during an engine automatic stop operation. In such a case, there is a problem that it is determined that it is normal in the device disclosed in Patent Literature 1 even though the necessary hydraulic pressure cannot be applied to the transmission gear mechanism.

Further, in the device disclosed in Patent Literature 2, a deteriorated state of an electrical oil pump is determined on the basis of an accumulated load calculated using accumulated driving time and accumulated rotation speed of the electrical oil pump and the like. In the case where it is determined that the electrical oil pump is in a deteriorated state, engine automatic stop control is prohibited. However, the device disclosed in Patent Literature 2 does not determine deterioration of a motor for a pump or the like. Further, as well as Patent Literature 1, in Patent Literature 2, causes such as abnormality (clogging, leak or the like) of an oil passage route to the transmission gear mechanism and abnormality (fixation and the like) of each valve in the hydraulic circuit have not been considered. Moreover, it is also considered that an operating condition of the electrical oil pump considerably varies from a driving situation of a user (driver). For that reason, there has been a problem that a situation in which necessary hydraulic pressure cannot be applied to the transmission gear mechanism from the electrical oil pump may occur even though availability of execution of the engine automatic stop control is determined on the basis of only the accumulated load of the electrical oil pump.

US 2004/029677 A1 discloses a device according to the preamble of claim 1.

SUMMARY

The present invention is made in view of the above points, and it is an object of the present invention to provide a drive source stop control device for a vehicle that can determine whether necessary hydraulic pressure can be applied to a transmission gear mechanism from an electrical oil pump during automatic stop of a drive source or not on the basis of a drive status of an electrical motor against a drive command, and appropriately determine availability of execution of automatic stop control for the drive source on the basis of a determination result.

In order to solve the problems described above, the present invention is directed to a drive source stop control device for a vehicle. The drive source stop control device for the vehicle according to the present invention includes: a drive source (1) for causing a vehicle to drive; a mechanical oil pump (31) driven by the drive source (1); an electrical motor (33) operated by a battery (22); an electrical oil pump (32) driven by the electrical motor (33); a transmission gear mechanism (4) that sets up a gear by means of hydraulic oil supplied from the mechanical oil pump (31) and the electrical oil pump (32) and changes rotary driving force of the drive source (1) to be transmitted to drive wheels (6); a motor control device (11) for controlling and causing the electrical motor (33) to operate; and a drive source/transmission gear mechanism control section (10) for controlling each of the drive source (1) and the transmission gear mechanism (4), wherein, in the case where predetermined conditions are met and the vehicle stops, drive source automatic stop control for causing the drive source (1) to stop is carried out. The drive source stop control device for the vehicle according to the present invention is characterized in that: the drive source stop control device further includes: a drive status detecting section (112, 113) for detecting a drive status of the electrical motor (33) in accordance with a drive command from the drive source/transmission gear mechanism control section (10, 11); a determining section (102) for determining whether necessary hydraulic pressure can be applied to the transmission gear mechanism (4, 30) from the electrical oil pump (32) during automatic stop of the drive source (1) or not on the basis of the drive status of the electrical motor (33) detected by the drive status detecting section (112, 113); and an automatic stop control determining section (103) for determining whether execution of the drive source automatic stop control is permitted or not on the basis of a determination result of the determining section (102).

According to the drive source stop control device for the vehicle of the present invention, by determining whether the necessary hydraulic pressure can be applied to the transmission gear mechanism from the electrical oil pump during automatic stop of the drive source or not on the basis of the drive status of the electrical motor against the drive command from the motor control device (or the drive source/transmission gear mechanism control section), it is possible to appropriately determine availability of execution of automatic stop control for the drive source on the basis of the determination result. Therefore, for example, even though the predetermined conditions are met when application failure of the hydraulic pressure to the transmission gear mechanism due to causes other than causes such as deterioration of the electrical motor or the electrical oil pump and an accumulated load thereof (for example, clogging or leak of an oil passage route, fixation of a valve in the hydraulic control circuit which causes the transmission gear mechanism to operate, and the like) is detected, execution of the drive source automatic stop control can be prohibited appropriately.

In the drive source stop control device for the vehicle according to the present invention, it is preferable that, in the case where the determining section (102) determines that the necessary hydraulic pressure cannot be applied to the transmission gear mechanism (4, 30), the automatic stop control determining section (103) determines that the execution of the drive source automatic stop control is to be prohibited. In this case, it is preferable that the drive source/transmission gear mechanism control section (10) causes the drive source (1) to restart on the basis of determination of prohibition by the automatic stop control determining section (103) in the case where the drive source (1) is caused to stop. Thus, even though execution of the drive source automatic stop control is started once, the drive source automatic stop control can be appropriately stopped due to application failure of the hydraulic pressure, and the necessary hydraulic pressure can be applied to the transmission gear mechanism via the mechanical oil pump.

In the drive source stop control device for the vehicle according to the present invention, it is preferable that the drive source stop control device further includes: a current value determining section (101) for determining a current value (Ia) to be supplied to the electrical motor (33) on the basis of the drive command from the drive source/transmission gear mechanism control section (10); an oil temperature sensor (34) for detecting oil temperature (Ta) of the hydraulic oil; and a rotation speed determining section (101) for determining a target value (M), an upper limit (NH) and a lower limit (NL) of rotation speed of the electrical motor (33) on the basis of the oil temperature (Ta) of the hydraulic oil detected by the oil temperature sensor (34). In this case, it is preferable that the drive status detecting section (112, 113) includes: a current value detecting section (112) for detecting a current value (Ib) supplied to the electrical motor (33); and a rotation speed detecting section (113) for detecting rotation speed (N) of the electrical motor (33), and that, in the case where the rotation speed (N) of the electrical motor (33) detected by the rotation speed detecting section (113) exceeds the upper limit (NH) or falls below the lower limit (NL), the determining section (102) determines that the necessary hydraulic pressure cannot be applied to the transmission gear mechanism (4, 30) during automatic stop of the drive source (1) and the automatic stop control determining section (103) determines that the execution of the drive source automatic stop control is prohibited. Thus, in the case where an abnormal state such that the actual rotation speed of the electrical motor exceeds the upper limit (for example, due to leak in an oil passage route at a discharge side of the electrical oil pump, fixation at an opened state of each valve, leak or clogging in an oil passage route at an intake side of the electrical oil pump and the like) or an abnormal state such that the actual rotation speed of the electrical motor falls below the lower limit (for example, due to clogging in an oil passage route at a discharge side of the electrical oil pump, fixation at a closed state of each valve, deterioration (mechanical loss) of the electrical motor or deterioration (demagnetization) of a magnetic material, and the like) occurs, execution of the drive source automatic stop control can be prohibited appropriately even though predetermined conditions are met.

In the drive source stop control device for the vehicle according to the present invention, it is preferable that the electrical motor (33) is controlled to operate by means of control of the motor control device (11) when an ignition key (23) of the vehicle is turned Off after the automatic stop control determining section (103) determines that the execution of the drive source automatic stop control is prohibited, and that the drive status detecting section (112, 113) detects the drive status of the electrical motor (33) at this time and the determining section (102) again determines whether the necessary hydraulic pressure can be applied to the transmission gear mechanism (4, 30) from the electrical oil pump (32) during automatic stop of the drive source (1) or not on the basis of the detected drive status of the electrical motor (33). Thus, when the automatic stop control determining section prohibits execution of the drive source automatic stop control before the ignition key of the vehicle is turned Off and the drive source/transmission gear mechanism control section and the motor control device thereby become a sleep state, the determining section carries out next determination. In the case where the prohibition can be released on the basis of this determination result, execution of the drive source automatic stop control can be permitted by meeting the predetermined conditions when the ignition key is turned On next time. For example, in the case where drive of the mechanical oil pump resolves leak or clogging due to fixation of a valve, it is possible to carry out the drive source automatic stop control from a next DC (drive cycle). This makes it possible to improve fuel economy of the vehicle, and to save many steps of maintenance and the like for the vehicle.

In the drive source stop control device for the vehicle according to the present invention, it is preferable that, in the case where the determining section (102) determines that the necessary hydraulic pressure can be applied to the transmission gear mechanism (4, 30) from the electrical oil pump (32) in the next determination, the automatic stop control determining section (103) determines that execution of the drive source automatic stop control is permitted when the ignition key (23) is turned On next time, and that, in the case where the determining section (102) determines that the necessary hydraulic pressure cannot be applied to the transmission gear mechanism (4, 30) from the electrical oil pump (32) in the next determination, the automatic stop control determining section (103) determines that execution of the drive source automatic stop control is prohibited when the ignition key (23) is turned On next time. Thus, in the case where the abnormal state is resolved in next determination, execution of the drive source automatic stop control can be permitted in the next DC (drive cycle). On the other hand, in the case where the abnormal state is not resolved in the next determination, execution of the drive source automatic stop control can also be prohibited in subsequent DCs (drive cycles). In this regard, in the case where the abnormal state has not been resolved, maintenance for the vehicle or the like is required. Therefore, the user (driver) may be informed that effect (that is, that effect may be alerted to the user).

In this regard, reference numerals in parenthesis described above exemplify, for reference, corresponding components of an embodiment (will be described later). Further, reference numerals in parenthesis corresponding to a current value, rotation speed and oil temperature described above exemplify symbols corresponding to values in the embodiment (will be described later) for reference.

According to the present invention, by determining whether necessary hydraulic pressure can be applied to a transmission gear mechanism from an electrical oil pump during automatic stop of a drive source or not on the basis of a drive status of an electrical motor against a drive command, it is possible to appropriately determine availability of execution of automatic stop control for the drive source on the basis of its determination result.

BRIEF DESCRIPTION OF THE DRAWINGS

The foregoing and other objects, features and advantages of the present invention will become more readily apparent from the following detailed description of a preferred embodiment of the present invention that proceeds with reference to the appending drawings:

FIG. 1 is a block diagram showing a configuration of a driving system of a hybrid vehicle to which a drive source stop control device for a vehicle according to the present invention is applied;

FIG. 2 is a block diagram showing a functional configuration of an electronic control unit and an electronic control unit for a pump;

FIG. 3 is a block diagram schematically showing connection of oil passages among a mechanical oil pump, an electrical oil pump and a hydraulic control circuit;

FIG. 4 is a graph showing a relationship between oil temperature Ta of hydraulic oil and estimated motor rotation speed M of an electrical pump motor;

FIG. 5 is a graph showing a relationship among a torque command value NA, an indicator current Ia and actual motor rotation speed N of the electrical pump motor;

FIG. 6 is a flowchart showing an engine automatic stop availability determining process carried out by the electronic control unit; and

FIG. 7 is a flowchart showing the rest of the engine automatic stop availability determining process carried out by the electronic control unit.

DETAILED DESCRIPTION

Hereinafter, a preferred embodiment of a drive source stop control device (engine stop control device) for a vehicle according to the present invention will be [2] described in detail with reference to the appending drawings. A drive source stop control device according to the present invention is appropriately applied to a so-called hybrid vehicle provided with two drive sources including an engine and a motor generator. However, the drive source stop control device according to the present invention is not limited to application to the hybrid vehicle, and may be applied to a vehicle on which only a fuel engine (internal combustion) using fuel such as gasoline, light oil, or the like is mounted.

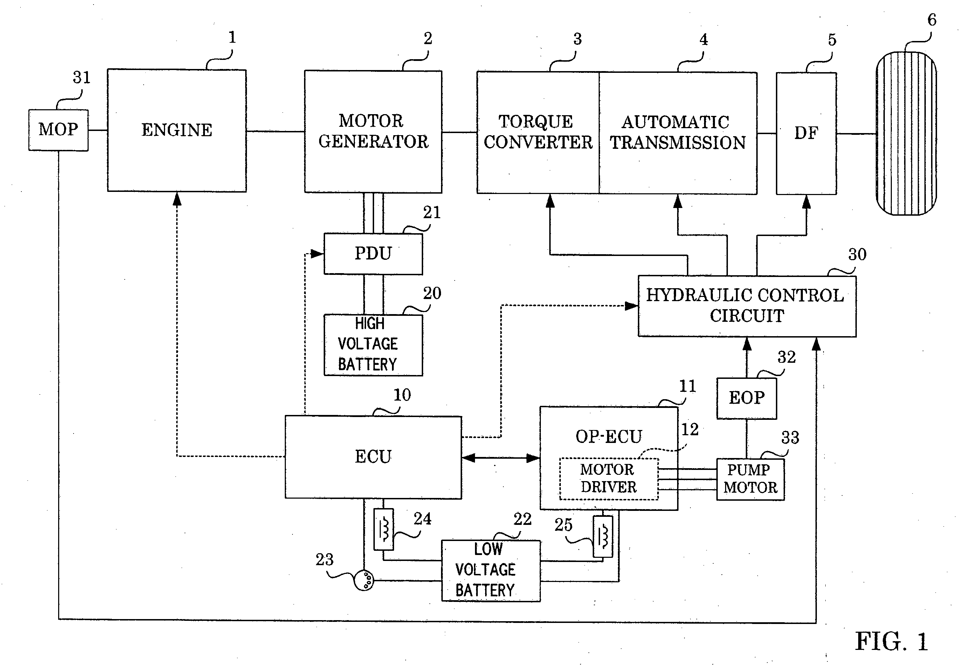

A configuration of a hybrid vehicle to which the present invention is applied will first be described. FIG. 1 is a block diagram showing a configuration of a driving system for a hybrid vehicle to which a drive source stop control device for a vehicle according to the present invention is applied. As shown in FIG. 1, the hybrid vehicle according to the present embodiment includes an engine 1 and a motor generator 2 arranged so as to be connected to each other in series as drive sources. Further, the hybrid vehicle includes: a torque converter 3 arranged so as to be respectively connected to output shafts of the engine 1 and the motor generator 2; an automatic transmission (transmission gear mechanism) 4; a differential mechanism (DF) 5 connected to an output shaft of the automatic transmission 4; a power drive unit (PDU) 21 for controlling electric power to be supplied to the motor generator 2; a hydraulic control circuit 30 for controlling each of the torque converter 3, the automatic transmission 4 and the differential mechanism 5; and an electronic control unit (ECU) 10 for controlling the whole vehicle including the engine 1, the power drive unit 21 and the hydraulic control circuit 30. Further, the hybrid vehicle includes at least an electronic control unit for a pump (hereinafter, referred to as a "pump electronic control unit") 11 for controlling drive of an electrical pump motor 33 (will be described later).

Rotary drive of the engine 1 and rotary drive of the motor generator 2 are transmitted to the automatic transmission 4 via the torque converter 3 alternatively or together with each other. The torque converter 3 carries out transmission of drive torque through fluid (hydraulic oil). As is known in the art, the torque converter 3 includes a lock-up clutch, a pump impeller, a turbine runner, a stator and the like (not shown in the drawings). In this regard, when lock-up control is being carried out, the rotary drives of the engine 1 and the motor generator 2 are directly transmitted to the automatic transmission 4 without transmission to the torque converter 3. In the present [2] embodiment, the automatic transmission 4 is a transmission gear mechanism with a plurality of gears, which is constructed by a plurality of transmission gear trains, and is a known Automatic Transmission (AT) or Automated Manual Transmission (AMT) having a plurality of frictional engagement elements (clutches). However, the automatic transmission 4 may be a so-called Continuously Variable Transmission (CVT).

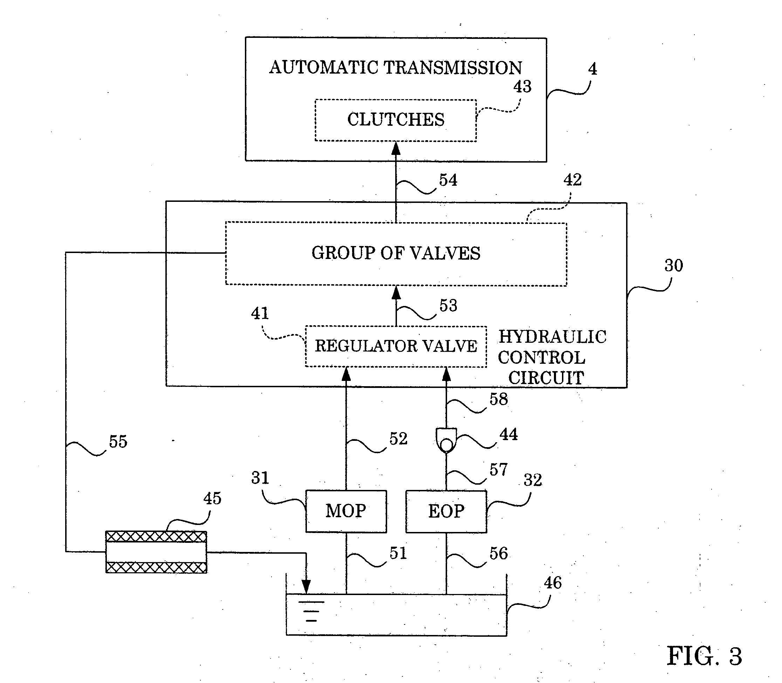

Plural kinds of control such as lock-up control for a lock-up clutch in the torque converter 3 and engagement of a desired frictional engagement element (clutch) in the automatic transmission 4 are carried out by controlling On/Off of each of a group of valves (not shown in the drawing, and see FIG. 3) in the hydraulic control circuit 30 by means of control of the electronic control unit 10. Namely, in the automatic transmission 4, automatic shift control to a predetermined gear according to a driving state of the vehicle is carried out by control of the electronic control unit 10.

The motor generator 2 functions as a motor that generates driving force for causing the hybrid vehicle to drive using electrical energy of a high voltage battery 20 during cooperative driving of the engine 1 and the motor generator 2 or during EV driving of only the motor generator 2. Further, the motor generator 2 also functions as a generator that generates electric power by means of regeneration of the motor generator 2 while reducing vehicle speed of the hybrid vehicle. The high voltage battery 20 is charged by means of electric power (regeneration energy) generated by the motor generator 2 during regeneration of this motor generator 2.

The hybrid vehicle according to the present embodiment includes a low voltage battery 22 as mounted on a conventional vehicle in addition to the high voltage battery 20 for the motor generator 2. The low voltage battery 22 supplies electric power of 12V, for example, to accessory devices (including the electronic control unit 10 and the pump electronic control unit 11) of the hybrid vehicle on the basis of On/Off of an ignition key 23 by a user (driver) of the hybrid vehicle. In this regard, relay circuits 24, 25 are respectively provided on wirings from the low voltage battery 22 to the electronic control unit 10 and the pump electronic control unit 11.

The electronic control unit 10 and the pump electronic control unit 11 are connected to each other by a communication line. Instructions (or commands) such as a torque command value are outputted from the electronic control unit 10 to the pump [2] electronic control unit 11, and data on a current value, motor rotation speed and the like detected as described below are outputted from the pump electronic control unit 11 to the electronic control unit 10. In this regard, in the present embodiment, the instructions (or commands) from the electronic control unit 10 are outputted as the torque command value. However, the present invention is not limited to these values, and it may be configured so that a command value for current (indicator current) is directly supplied from the electronic control unit 10 to the electrical pump motor 33 (will be described later), for example. In this case, means for detecting a state of the electrical pump motor 33 (for example, a drive status detecting section (will be described later)) may be provided in the electronic control unit 10 without providing the pump electronic control unit 11.

The hybrid vehicle according to the present embodiment includes: a mechanical oil pump (MOP) 31 for supplying hydraulic oil to the hydraulic control circuit 30; and an electrical oil pump (EOP) 32. The mechanical oil pump 31 is driven by the engine 1 and the motor generator 2 via a pump drive gear (not shown in the drawings) within the torque converter 3, for example. In this regard, although the mechanical oil pump 31 is illustrated at the left side of the engine 1 in FIG. 1 in order to facilitate its illustration, the mechanical oil pump 31 is actually provided in the vicinity of the torque converter 3.

The electrical oil pump 32 is driven via the pump electronic control unit (OP-ECU) 11 controlled by the electronic control unit 10 and an electrical pump motor (electrical motor) 33 for the electrical oil pump 32. The pump electronic control unit 11 includes a motor driver 12 for controlling drive of the electrical pump motor 33. In this regard, in the automatic transmission 4, a desired gear is set up by supplying hydraulic oil (hydraulic pressure) from the mechanical oil pump 31 or electrical oil pump 32 to the hydraulic control circuit 30 by means of On/Off control for respective valves (not shown in the drawings) by the electronic control unit 10, whereby rotary driving force of the engine 1 and/or the motor generator 2 is converted to be transmitted to drive wheels 6.

In the hybrid vehicle according to the present embodiment, the electronic control unit 10 carries out engine (drive source) automatic stop control (that is, idling stop control) for causing the engine 1 to stop when predetermined conditions are met [2] and the hybrid vehicle stops. When engine automatic stop control is carried out by the electronic control unit 10 to cause the engine 1 to stop, supply of the hydraulic oil (hydraulic pressure) to the hydraulic control circuit 30 from the mechanical oil pump 31 is stopped. At this time, the electrical pump motor 33 is driven via the motor driver 12 of the pump electronic control unit 11 on the basis of a command of the electronic control unit 10, and the hydraulic oil is thereby supplied to the hydraulic control circuit 30 from the electrical oil pump 32. A three-phase brushless DC motor driven by means of the low voltage battery 22 is utilized as this electrical pump motor 33, for example.

In this regard, although detailed explanation is omitted, in the hybrid vehicle according to the present embodiment, the electronic control unit 10 restarts the stopped engine 1 and stops drive of the electrical pump motor 33 when automatic stop control (idling stop control) of the engine 1 is carried out and predetermined conditions are further met. Thus, since the engine 1 is caused to stop when the hybrid vehicle is temporarily stopped (that is, at the condition where the ignition key 23 is not turned Off and the hybrid vehicle is temporarily stopped), it is possible to improve fuel economy of the vehicle.

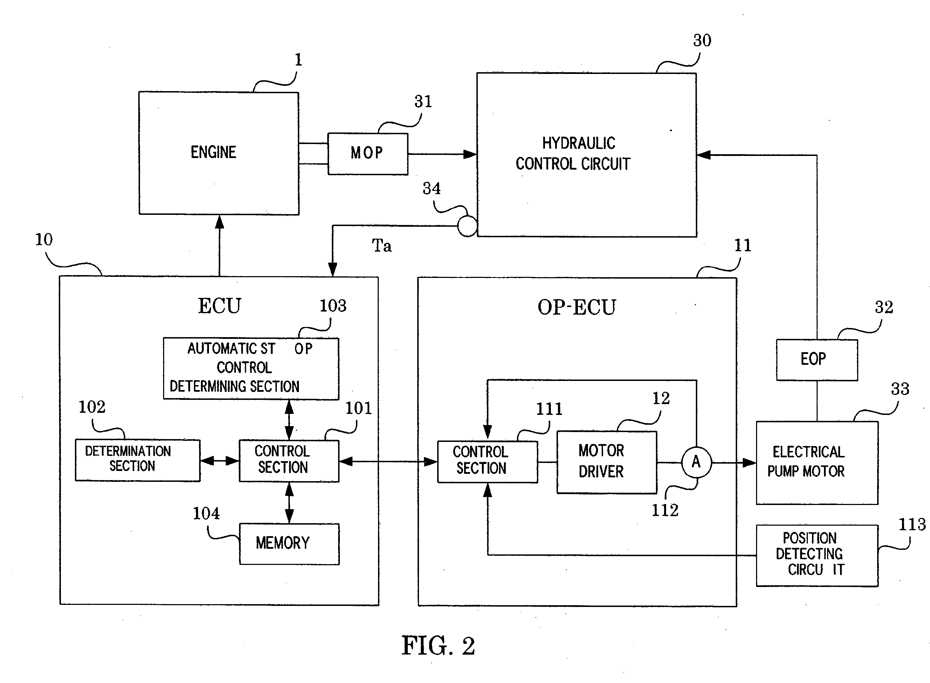

Next, a configuration of the electronic control unit 10 and the pump electronic control unit 11 according to the present embodiment will be described. FIG. 2 is a block diagram showing a functional configuration of the electronic control unit 10 and the pump electronic control unit 11. As shown in FIG. 2, the electronic control unit 10 of the present embodiment includes a control section 101, a determining section 102, an automatic stop control determining section 103 and a memory 104. Further, the pump electronic control unit 11 of the present embodiment includes, in addition to the motor driver 12, a control section 111, an ammeter (current value detecting section) 112, and a position detecting circuit (rotation speed detecting section) 113.

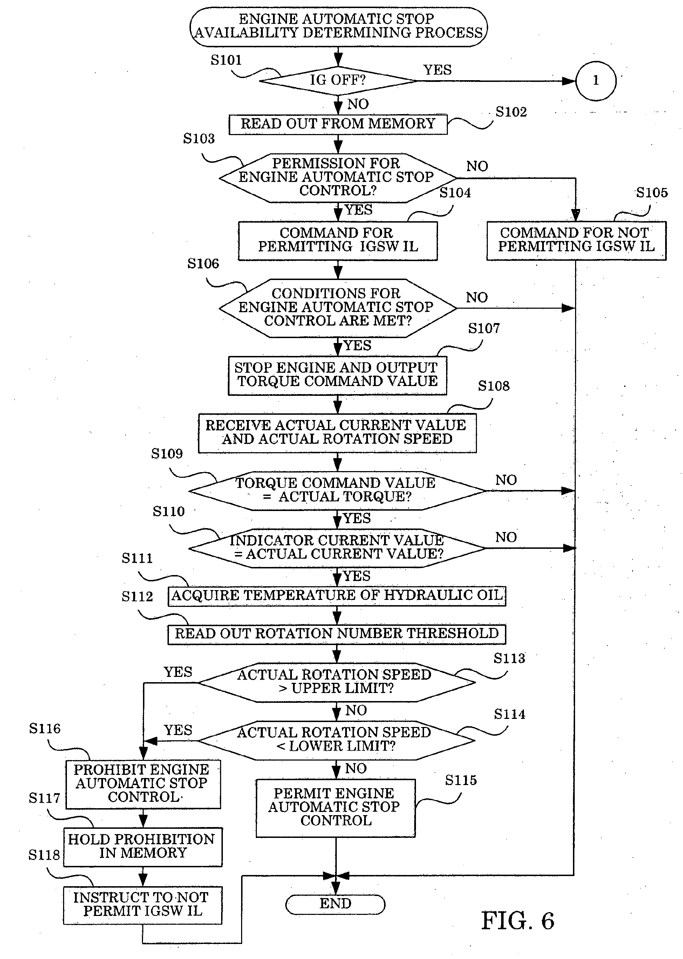

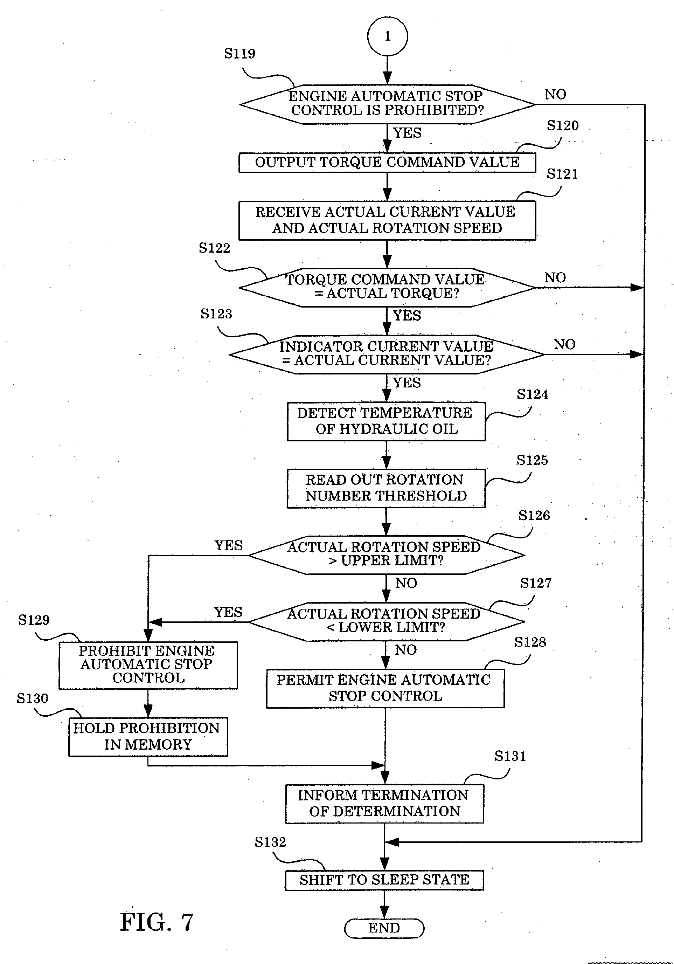

The control section 101 of the electronic control unit 10 is connected to each of the determining section 102, the automatic stop control determining section 103 and the memory 104 via an internal bus. The control section 101 controls the respective components particularly when an engine automatic stop availability determining process (will be described later, and see FIG. 6 and FIG. 7) is carried out. As described above, this control section 101 is also connected to the control section 111 [2] of the pump electronic control unit 11 via a communication line.

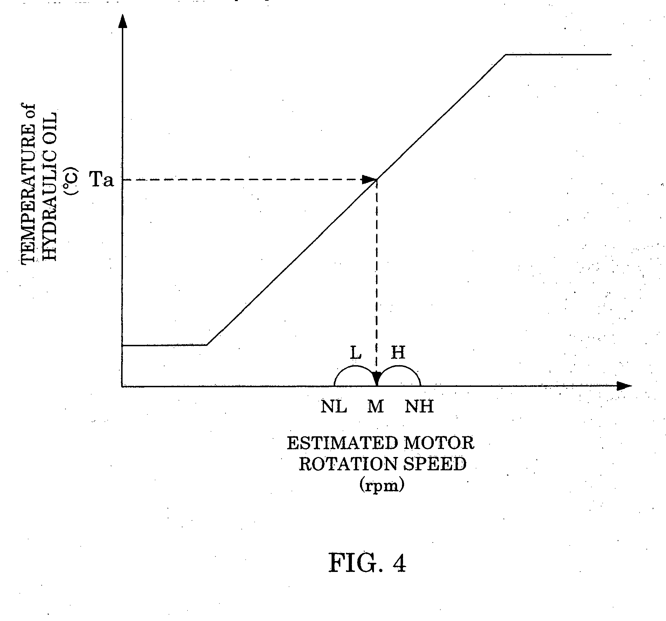

The memory 104 is constructed by a nonvolatile memory, for example. Mapped data (see FIG. 4) indicating a relationship among oil temperature Ta of hydraulic oil (will be described later), estimated motor rotation speed M of the electrical pump motor 33, and an upper limit NH and a lower limit NL of motor rotation speed at that time are stored in the memory 104. Further, a flag corresponding to permission or prohibition of engine automatic stop control in the engine automatic stop availability determining process (will be described later) is temporarily stored in the memory 104.

When predetermined conditions are met on the condition that the ignition key 23 is in an On state, the control section 101 causes the engine 1 to stop. Here, the predetermined conditions include, for example, a case where a shift position is shifted from a D (forward) position to an N (neutral) position or a P (parking) position in a state in which the hybrid vehicle is stopped (that is, vehicle speed is zero) and a switch of an air conditioner is Off.

In this case, in order to cause the electrical pump motor 33 to drive, the control section 101 outputs a torque command value (torque indicator) NA to the control section 111 in accordance with hydraulic pressure of hydraulic oil to be applied to the hydraulic control circuit 30 from the electrical oil pump 32. In this regard, the control section 101 functions as a current value determining section for determining a current value to be supplied to the electrical pump motor 33, that is, an indicator current Ia on the basis of a torque command value NA. Here, the indicator current Ia is calculated by dividing torque constant into the torque command value NA.

The control section 111 of the pump electronic control unit 11 controls drive of the motor driver 12 so as to output the indicator current Ia to be supplied to the electrical pump motor 33 on the basis of the received torque command value NA and the indicator current Ia. Here, rotation of the electrical pump motor 33 is controlled on the basis of pulse voltage inputted from the motor driver 12. Namely, in the present embodiment, the pulse voltage is controlled by pulse-width modulation (PWM) in which a width of a pulse is controlled so that the electrical pump motor 33 is rotated by actual motor rotation speed N corresponding to the indicator current Ia.

In this case, an actual current value Ib that is supplied to the electrical pump motor 33 is detected by the ammeter 112, and the detected actual current value Ib is outputted to the control section 111. The control section 111 carries out feedback control so that a current to be supplied to the electrical pump motor 33 becomes the indicator current Ia with a constant value on the basis of the inputted current value Ib and the indicator current Ia.

Further, the position detecting circuit 113 is configured from a plurality of hole elements, for example. The position detecting circuit 113 functions as a rotation speed detecting section for detecting rotation speed of a rotor within the electrical pump motor 33 (that is, the actual motor rotation speed N). The ammeter 112 and the position detecting circuit 113 constitute a drive status detecting section for detecting a drive status of the electrical pump motor 33 during engine automatic stop control. In this regard, the actual current value Ib (A) detected by the ammeter 112 (which is substantially equal to the indicator current Ia because the feedback control is carried out) and the actual motor rotation speed N (rpm) of the electrical pump motor 33 based on the position of the rotor detected by the position detecting circuit 113 are outputted to the control section 101 of the electronic control unit 10 via the control section 111. Further, actual torque NB driven by the pump electronic control unit 11 finally becomes similar to the torque command value NA (constant value) outputted from the electronic control unit 10.

Here, an oil temperature sensor 34 for detecting oil temperature Ta of hydraulic oil is provided in the vicinity of the hydraulic control circuit 30. The oil temperature Ta of the hydraulic oil detected by the oil temperature sensor 34 is outputted to the electronic control unit 10. As shown in FIG. 4, the control section 101 of the electronic control unit 10 determines a target value (the estimated motor rotation speed) M of motor rotation speed of the electrical pump motor 33, the upper limit NH (rpm) and the lower limit NL (rpm) thereof on the basis of the oil temperature Ta of the hydraulic oil detected by the oil temperature sensor 34. Namely, the control section 101 functions as a rotation speed determining section of the present invention.

FIG. 4 is a graph showing a relationship between the oil temperature Ta of the hydraulic oil and the estimated motor rotation speed M of the electrical pump motor 33. There is substantially a linear relationship in a usage region of the electrical pump motor 33 (characteristics map of the hydraulic oil) between the oil temperature Ta of the hydraulic oil and the estimated motor rotation speed M of the electrical pump motor 33. For that reason, when the oil temperature Ta of the hydraulic oil is acquired, the estimated motor rotation speed M of the electrical pump motor 33 is obtained. In response to the estimated motor rotation speed M, the upper limit NH and the lower limit NL are respectively obtained by following expressions (1) and (2):

$$\text{(Upper limit NH) (rpm)}$$
$$= \text{(Estimated motor rotation speed M)} + \text{(High threshold value H)} \qquad (1)$$

$$\text{(Lower limit NL) (rpm)}$$
$$= \text{(Estimated motor rotation speed M)} - \text{(Low threshold value L)} \qquad (2)$$

In this regard, the high threshold value H and the low threshold value L may be set up in advance on the basis of test results and motor temperature using the same electrical pump motor 33, and rotation variation due to an advance angle of the motor.

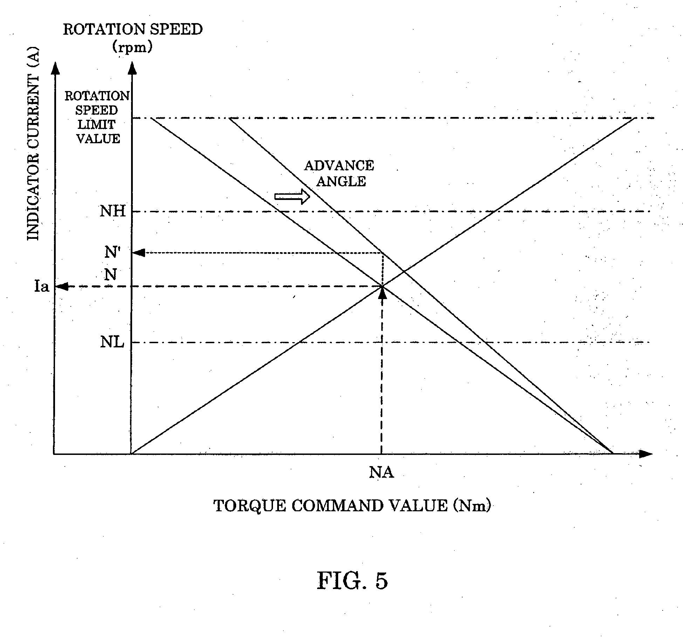

As shown in FIG. 5, the electrical pump motor 33 may carry out advance angle control against the torque command value NA. In this case, a line of pump characteristics is shifted in a direction indicated by an arrow (right direction in FIG. 5) in accordance with an advance angle. Thus, actual motor rotation speed of the electrical pump motor 33 is increased from N (rpm) to N' (rpm) even though the torque command value NA and the indicator current Ia are the same as those at the actual motor rotation speed N. In this regard, in the case of the advance angle control, the upper limit NH (rpm) and the lower limit NL (rpm) of the motor rotation speed of the electrical pump motor 33 may also be shifted to a high speed side in accordance with increase in the actual motor rotation speed N'. FIG. 5 is a graph showing a relationship among the torque command value NA, the indicator current Ia and the actual motor rotation speed N of the electrical pump motor 33. In the state shown in FIG. 5, the actual current value Ib of the electrical pump motor 33 is close to the indicator current Ia, and the torque command value (indicator torque) NA is close to the actual torque NB. Thus, the electronic control unit 10 determines that the electrical pump motor 33 is in a state in which the electrical pump motor 33 is driven in accordance with a command of the electronic control unit 10, and carries out determination of the actual motor rotation speed N (will be described later). In this regard, the rotation speed limit value shown in FIG. 5 is a limit value at which the motor rotation speed cannot be heightened on the basis of design of the electrical pump motor 33.

The determining section 102 determines whether necessary hydraulic[2] pressure can be applied to the hydraulic control circuit 30 (automatic transmission 4) by means of the electrical oil pump 32 during automatic stop of the engine 1 or not on the basis of a drive status of the electrical pump motor 33 detected by the drive status detecting section (that is, the actual motor rotation speed N (rpm) of the electrical pump motor 33, the upper limit NH (rpm) and the lower limit NL of estimated motor rotation speed M (rpm) corresponding to the oil temperature Ta of the hydraulic oil described above). Further, the automatic stop control determining section 103 determines whether execution of the automatic stop control for the engine 1 is permitted under predetermined conditions on the basis of the determination result of the determining section 102.

More specifically, the control section 111 of the pump electronic control unit 11 calculates actual motor rotation speed N of the electrical pump motor 33 on the basis of a position of the rotor detected by the position detecting circuit 113. Then, in the case where the actual motor rotation speed N acquired and received from the control section 111 is not slower than the lower limit NL and not faster than the upper limit NH, the determining section 102 determines that the necessary hydraulic pressure can be applied to the hydraulic control circuit 30 (automatic transmission 4) during automatic stop of the engine 1. On the other hand, in the case where this actual motor rotation speed N exceeds the upper limit NH or falls below the lower limit NL, the determining section 102 determines that the necessary hydraulic pressure cannot be applied to the hydraulic control circuit 30 (automatic transmission 4) during automatic stop of the engine 1.

In the case where the determining section 102 determines that the necessary hydraulic pressure can be applied to the hydraulic control circuit 30 (automatic transmission 4) during automatic stop of the engine 1, the automatic stop control determining section 103 determines that execution of the engine automatic stop control is permitted, and stores a flag indicating that effect in the memory 104. On the other hand, in the case where the determining section 102 determines that the necessary hydraulic pressure cannot be applied to the hydraulic control circuit 30 (automatic transmission 4) during automatic stop of the engine 1, the automatic stop control determining section 103 determines that execution of the engine automatic stop control is prohibited, and stores a flag indicating that effect in the memory 104. Here, in the [2] present embodiment, in the case where the automatic stop control determining section 103 determines that execution of the engine automatic stop control is prohibited after the engine 1 is caused to stop, the electronic control unit 10 causes the engine 1 to restart to operate the mechanical oil pump 31, whereby hydraulic oil with the necessary hydraulic pressure is supplied to the hydraulic control circuit 30 via the mechanical oil pump 31.

Next, a connection configuration of the hydraulic pressure control device according to the present embodiment, including the mechanical oil pump 31, the electrical oil pump 32 and the hydraulic control circuit 30 will be described. FIG. 3 is a block diagram schematically showing an oil passage connection among the mechanical oil pump 31, the electrical oil pump 32 and the hydraulic control circuit 30.

In the case where the engine 1 (or the motor generator 2) is driven, the mechanical oil pump 31 is rotatively driven by means of driving force of the engine 1. The mechanical oil pump 31 suctions hydraulic oil from an oil tank 46 via an oil passage 51 to pump the suctioned hydraulic oil to a regulator valve 41 in the hydraulic control circuit 30 via an oil passage 52. The regulator valve 41 regulates the hydraulic oil pumped from the mechanical oil pump 31 to generate line pressure PL in an oil passage 53, for example. The hydraulic oil with the line pressure PL is supplied to a desired clutch of a plurality of clutches 43 via a group of valves 42, which includes a plurality of shift valves, on/off solenoid valves and linear solenoid valves, and an oil passage 54 to cause the desired clutch to engage. Hydraulic oil drained from each of the clutches 43 and each of the group of valves 42 and lubricating oil supplied to bearings of the clutches 43 and the like are returned to the oil tank 46 via an oil passage 55 and a strainer 45.

On the other hand, during automatic stop control for the engine 1, the electrical oil pump 32 is rotatively driven via the motor driver 12 and the electrical pump motor 33 by means of a power source of the low voltage battery 22. The electrical oil pump 32 suctions the hydraulic oil from the oil tank 46 via an oil passage 56 to pump the suctioned hydraulic oil to the regulator valve 41 in the hydraulic control circuit 30 via an oil passage 57, a check valve 44 and an oil passage 58. The regulator valve 41 regulates the hydraulic oil pumped from the electrical oil pump 32 to generate the line pressure PL in the oil passage 53, for example. The hydraulic oil with the line [2] pressure PL is supplied to a desired clutch of the plurality of clutches 43 via the group of valves 42, which includes the plurality of shift valves, the on/off solenoid valves and the linear solenoid valves, and the oil passage 54 to cause the desired clutch to engage. Hydraulic oil drained from each of the clutches 43 and each of the group of valves 42 and lubricating oil supplied to the bearings of the clutches 43 and the like are returned to the oil tank 46 via the oil passage 55 and the strainer 45.

Here, the oil passage 52 at an output side of the mechanical oil pump 31 is connected to the oil passage 58 via the regulator valve 41. For this reason, even in the case where a ball, a float, a swing or the like is fixed on an inner wall surface of the check valve 44, for example, the fixation may be resolved by means of discharge pressure of the mechanical oil pump 31. Thus, in the present invention, even in the case where the determining section 102 determines that the necessary hydraulic pressure cannot be applied to the hydraulic control circuit 30 (automatic transmission 4) by means of the electrical oil pump 32 during automatic stop of the engine 1 as described above, the electrical oil pump 32 is operated when the ignition key 23 of the hybrid vehicle is turned Off, and the determining section 102 carries out a next determining process. Detailed explanation will be described later.

Returning to FIG. 2, the case where it is determined that the electrical oil pump 32 cannot apply necessary hydraulic pressure to the hydraulic control circuit 30 (automatic transmission 4) during automatic stop of the engine 1 will be described. First, as the case where the actual motor rotation speed N exceeds the upper limit NH, the cases where there is pressure failure in the hydraulic control circuit 30, such as the case where the electrical oil pump 32 operates under an unloaded condition (that is, the case where an oil passage is closed at the oil passage 56 or the oil passage 55 and the strainer 45 between the electrical oil pump 32 and the oil tank 46) and the case where leak occurs in an oil passage route including the electrical oil pump 32, are considered.

Here, as causes of occurrence of leak, leak to a drain or the like due to fixation of the regulator valve 41 or any valve of the group of valves 42 in the hydraulic control circuit 30 is assumed. In this case, leak similarly occurs in a driving state of the mechanical oil pump 31. Thus, the electronic control unit 10 is allowed to detect an error of the hydraulic control circuit 30 using other logic than that used in the present invention. [2]

Further, as the case where the actual motor rotation speed N falls below the lower limit NL, it is assumed that pressure failure to the hydraulic control circuit 30 occurs due to clogging in an oil passage route at a discharge side of the electrical oil pump 32, fixation of a ball of the check valve 44, deterioration (mechanical loss) in the electrical pump motor 33 or deterioration (demagnetization) of a magnetic material in the electrical pump motor 33.

Therefore, in such a case, hydraulic pressure cannot normally be applied to the hydraulic control circuit 30 and the automatic transmission 4 by continuing the automatic stop control for the engine 1. For this reason, the electronic control unit 10 causes the engine 1, for which the automatic stop control is being carried out, to restart. The automatic stop control determining section 103 determines that future execution of the engine automatic stop control is prohibited, and stores that effect in the memory 104. On the contrary, in the case where the actual motor rotation speed N (rpm) lies between the upper limit NH and the lower limit NL, the electronic control unit 10 may continue the engine automatic stop control under predetermined conditions.

In the conventional technique, in the case where it is determined that there is failure or deterioration of an electrical motor in view of only failure and deterioration of the electrical motor (for example, a state in which the electrical motor cannot be driven), the engine automatic stop control is prohibited or canceled. However, since availability of the engine automatic stop control is determined on the basis of the indicator current Ia to the electrical pump motor 33 and the actual motor rotation speed N in the present invention, it is further possible to detect an error of the hydraulic control circuit 30 due to leak of hydraulic oil from an oil passage route or any valve and fixation of the check valve 44 or any valve, and it is possible to appropriately prohibit execution of the engine automatic stop control during occurrence of such an error.

Now, in the present embodiment, in the case where the automatic stop control determining section 103 prohibits execution of the engine automatic stop control on the basis of the determination result of the determining section 102 as described above, the control section 101 of the electronic control unit 10 stores that effect (information on prohibition of the engine automatic stop control) in the memory 104, and prohibits interlocking control with the electronic control unit 10 by the pump electronic control unit 11 during one DC (drive cycle). Namely, in the case where [2] execution of the engine automatic stop control is prohibited, the electronic control unit 10 causes the engine 1 to carry out idling driving without determining whether conditions of execution of engine automatic stop control are met or not. In this case, the electronic control unit 10 may turn Off the relay circuit 25 from the low voltage battery 22 to the pump electronic control unit 11, for example.

In the present embodiment, in the case where the flag indicating that execution of the engine automatic stop control is prohibited is stored in the memory 104 in this manner and the ignition key 23 is then turned Off, the electronic control unit 10 controls the pump electronic control unit 11 to drive the electrical pump motor 33 before it becomes a sleep state, and the determining section 102 again determines whether the necessary hydraulic pressure can be applied to the hydraulic control circuit 30 (automatic transmission 4) via the electrical oil pump 32 during automatic stop of the engine 1 or not on the basis of the drive status of the electrical pump motor 33 detected by the drive status detecting section (including the ammeter 112 and the position detecting circuit 113), that is, the actual motor rotation speed N (rpm) of the electrical pump motor 33, the upper limit NH (rpm) and the lower limit NL of the estimated motor rotation speed M (rpm) described above.

Namely, when the ignition key 23 of the hybrid vehicle is turned Off after the automatic stop control determining section 103 determined that execution of the automatic stop control for the engine 1 is prohibited, the electrical pump motor 33 is controlled to operate on the basis of control of the electronic control unit 10. At this time, the position detecting circuit 113 detects actual motor rotation speed N on the basis of the position of the rotor of the electrical pump motor 33, and the control section 101 acquires the oil temperature Ta of the hydraulic oil from the oil temperature sensor 34. The determining section 102 again determines whether the necessary hydraulic pressure can be applied to the hydraulic control circuit 30 (automatic transmission 4) during automatic stop of the engine 1 or not on the basis of the actual motor rotation speed N, the upper limit NH (rpm) and the lower limit NL of the estimated motor rotation speed M (rpm) corresponding to the oil temperature Ta of the hydraulic oil.

Then, in the case where the determining section 102 determines that the necessary hydraulic pressure can be applied to the hydraulic control circuit 30 (automatic transmission 4) during automatic stop of the engine 1 in another [2] determination, the automatic stop control determining section 103 determines that execution of the automatic stop control for the engine 1 is permitted when the ignition key 23 is turned On next time. This causes permission of the interlocking control with the electronic control unit 10 by the pump electronic control unit 11. The control section 101 of the electronic control unit 10 may store the effect that execution of the automatic stop control for the engine 1 is permitted in the memory 104, and turn the relay circuit 25 On.

On the other hand, in the case where the determining section 102 determines that the necessary hydraulic pressure cannot be applied to the hydraulic control circuit 30 (automatic transmission 4) during automatic stop of the engine 1 even in the next determination, the automatic stop control determining section 103 determines that execution of the automatic stop control for the engine 1 is prohibited even when the ignition key 23 is turned On next time. This causes the effect that execution of the engine automatic stop control is prohibited (that is, prohibition information) to be held in the memory 104. Thus, even though the ignition key 23 is turned On again and the engine 1 is caused to start, the electronic control unit 10 may prohibit execution of the automatic stop control for the engine 1, and repeatedly carry out redetermination when the ignition key 23 is turned Off. In this regard, in the case where the automatic stop control determining section 103 determines that, the predetermined number of times (for example, twice) in a row, execution of the automatic stop control for the engine 1 is prohibited in redetermination when the ignition key 23 is turned Off, the electronic control unit 10 may inform the user (or driver) (or alert to the user) that automatic stop control for the engine 1 cannot be carried out using an alert lamp on a front panel, for example.

Next, an operation of the drive source stop control device for the vehicle according to the present invention will be described. FIG. 6 and FIG. 7 are a flowchart showing an engine automatic stop availability determining process carried out by the electronic control unit 10 of the present embodiment. This engine automatic stop availability determining process is carried out every predetermined period of time, for example, when the ignition key 23 is turned On.

The electronic control unit 10 first determines whether the ignition key 23 is turned Off or not (Step S101). In the case where it is determined that the ignition key 23 is turned Off, the processing flow proceeds to Step S119, and a next determining process by the determining section 102 is carried out. On the other hand, in the case where it is determined that the ignition key 23 is not turned Off, the control section 101 reads out availability information of the engine automatic stop control (flag of permission information or prohibition information) stored in the memory 104 (Step S102).

The control section 101 then determines whether the information read out from the memory 104 at Step S102 is permission for engine automatic stop control or not (Step S103). In the case where it is determined that it is not permission for the engine automatic stop control, that is, it is determined that execution of the engine automatic stop control is prohibited, the control section 101 outputs, to the control section 111 of the pump electronic control unit 11, an instruction (command) for not permitting the pump electronic control unit 11 to work (or interlock) with the electronic control unit 10 in accordance with On/Off of a switch of the ignition key 23 (Step S105), and terminates the processing flow of this engine automatic stop availability determining process.

On the other hand, in the case where it is determined that the engine automatic stop control is permitted, the control section 101 outputs, to the control section 111 of the pump electronic control unit 11, a command for permitting the pump electronic control unit 11 to work with the electronic control unit 10 in accordance with On/Off of the switch of the ignition key 23 (Step S 104).

The control section 101 then determines whether conditions (predetermined conditions, that is, execution conditions) for carrying out the automatic stop control for the engine 1 are met or not (Step S106). In the case where it is determined that the execution conditions of the engine automatic stop control are not met, the control section 101 directly terminates the processing flow of this engine automatic stop availability determining process. In the case where it is determined that the execution conditions of the engine automatic stop control are met, the control section 101 causes the engine 1 to stop, and outputs a torque command value NA to the control section 111 of the pump electronic control unit 11 (Step S107).

Here, the control section 101 may determine the indicator current Ia to be supplied to the electrical pump motor 33 on the basis of the torque command value NA, and the determined indicator current Ia may also be outputted to the control section 111. The control section 111 controls drive of the electrical pump motor 33 with pulse-width modulation on the basis of the torque command value NA (indicator current Ia). The control section 111 then outputs the actual current value Ib detected by the ammeter 112 and the actual motor rotation speed N detected by the position detecting circuit 113 to the control section 101. The control section 101 then receives the actual current value Ib and the actual motor rotation speed N (Step S108).

Subsequently, the control section 101 calculates the actual torque NB using the actual current value Ib and the torque constant, and determines whether the torque command value NA is substantially equal to the calculated actual torque NB or not (Step S109). In the case where it is determined that the torque command value NA is not substantially equal to the actual torque NB, the control section 101 terminates the processing flow of this engine automatic stop availability determining process.

On the other hand, in the case where it is determined that the torque command value NA is substantially equal to the actual torque NB, the control section 101 subsequently determines whether the indicator current Ia is substantially equal to the actual current value Ib or not (Step S110). In the case where it is determined that the indicator current Ia is not substantially equal to the actual current value Ib, the control section 101 also terminates the processing flow of this engine automatic stop availability determining process.

In the case where it is determined that the indicator current Ia is substantially equal to the actual current value Ib, the control section 101 acquires the oil temperature Ta of the hydraulic oil detected by the oil temperature sensor 34 (Step S111), and determines estimated motor rotation speed M of the electrical pump motor 33, an upper limit NH and a lower limit NL thereof on the basis of this oil temperature Ta and the graph of FIG. 4 (Step S 112).

Then, the control section 101 in turn determines whether the actual motor rotation speed N acquired at Step S108 is faster than the upper limit NH or not (Step S113) and whether the actual motor rotation speed N is slower than the lower limit NL or not (Step S114). In the case where it is determined that the actual motor rotation speed N is not slower than the lower limit NL and not faster than the upper limit NH, the control section 101 determines that execution of the automatic stop control for the engine 1 is permitted (Step S115), and stores that effect in the memory 104. The control section 101 terminates the processing flow of this engine automatic stop availability determining process.

On the other hand, in the case where it is determined that the actual motor rotation speed N is faster than the upper limit NH or slower than the lower limit NL, the control section 101 determines that execution of the automatic stop control for the engine 1 is prohibited (Step S116), and stores that effect in the memory 104 (Step S117). As well as the process at Step S105, the control section 101 outputs an instruction (command), in which the control section 111 of the pump electronic control unit 11 is not permitted to work with the electronic control unit 10 in accordance with On/Off of the switch of the ignition key 23, to the control section 111 (Step S118), and the control section 101 terminates the processing flow of this engine automatic stop availability determining process.

In the case where it is determined at Step S101 that the ignition key 23 is turned Off, the control section 101 reads out the flag stored in the memory 104, and determines whether execution of the engine automatic stop control is currently prohibited or not (Step S 119). In the case where it is determined that execution of the engine automatic stop control is not prohibited, the control section 101 and the control section 111 shift to a sleep state (Step S 132), and the control section 101 terminates the processing flow of this engine automatic stop availability determining process.

On the other hand, in the case where it is determined that execution of the engine automatic stop control is prohibited, the control section 101 outputs the torque command value NA to the control section 111 of the pump electronic control unit 11 as well as the processes at Steps S107 to S 112 (Step S120), and receives the actual current value Ib and the actual motor rotation speed N from the control section 111 (Step S121).

Subsequently, the control section 101 determines whether the torque command value NA is substantially equal to the actual torque NB or not (Step S122). In the case where it is determined that the torque command value NA is not substantially equal to the actual torque NB, the control section 101 terminates the processing flow of this engine automatic stop availability determining process. In the case where it is determined that the torque command value NA is substantially equal to the actual torque NB, the control section 101 subsequently determines whether the indicator current Ia is substantially equal to the actual current value Ib or not (Step S123). In the case where it is also determined that the indicator current Ia is not substantially equal to the actual current value Ib, the control section 101 terminates the processing flow of this engine automatic stop availability determining process.

In the case where it is determined that the indicator current Ia is substantially equal to the actual current value Ib, the control section 101 acquires the oil temperature Ta of the hydraulic oil detected by the oil temperature sensor 34 (Step S124), and determines estimated motor rotation speed M, an upper limit NH and a lower limit NL of the electrical pump motor 33 on the basis of this oil temperature Ta and the graph of FIG. 4 (Step S125).

Then, the control section 101 in turn determines whether the actual motor rotation speed N acquired at Step S121 is faster than the upper limit NH or not (Step 5126) and whether the actual motor rotation speed N is slower than the lower limit NL or not (Step S127) (that is, the control section 101 carries out next determination by the determining section 102). In the case where it is determined that the actual motor rotation speed N is not slower than the lower limit NL and not faster than the upper limit NH, the control section 101 determines that execution of the automatic stop control for the engine 1 is permitted (Step S128) because it is considered that leak, clogging or the like of the oil passage route is released by means of the next determination. The control section 101 then stores that effect in the memory 104.

On the other hand, in the case where it is determined that the actual motor rotation speed N is faster than the upper limit NH or slower than the lower limit NL, the control section 101 determines that prohibition on execution of the automatic stop control for the engine 1 is kept (Step S129), and stores that effect in the memory 104 (Step S130). The control section 101 then informs the control section 111 of the pump electronic control unit 11 of termination of the next determination (Step S131). The control section 111 stops drive of the electrical pump motor 33 by the motor driver 12. The control section 101 and the control section 111 shift to a sleep state (Step S132), and terminate the processing flow of this engine automatic stop availability determining process.

As explained above, according to the drive source stop control device for the vehicle of the present invention, the drive source stop control device is configured so as to include: the engine 1 (and the motor generator 2) for causing a hybrid vehicle or a fuel vehicle using gasoline or light oil to drive; the mechanical oil pump 31 driven by the engine 1 (and the motor generator 2); the electrical pump motor 33 operated by the low voltage battery 22 via the motor driver 12 in the pump electronic control unit 11; the electrical oil pump 32 driven by the electrical pump motor 33; the automatic transmission 4 that sets up a desired gear (each clutch 43) by means of the hydraulic oil supplied from the mechanical oil pump 31 and electrical oil pump 32 and changes the rotary driving force of the engine 1 (or the motor generator 2) to be transmitted to the drive wheels 6; the pump electronic control unit 11 for controlling and causing the electrical pump motor 33 to operate; and the electronic control unit 10 for controlling the engine 1, the automatic transmission 4, the power drive unit 21 and the hydraulic control circuit 30. In the case where the predetermined conditions are met and the hybrid vehicle stops, the engine automatic stop control (drive source automatic stop control) for causing the engine 1 to stop is carried out. The drive source stop control device for the vehicle according to the present invention is characterized in that: the drive source stop control device further includes: the ammeter 112 and the position detecting circuit 113 as the drive status detecting section for detecting the drive status of the electrical pump motor 33 in accordance with the drive command (torque command value) from the electronic control unit 10 and the pump electronic control unit 11; the determining section 102 for determining whether the necessary hydraulic pressure can be applied to the automatic transmission 4 and the hydraulic control circuit 30 from the electrical oil pump 32 during automatic stop of the engine 1 or not on the basis of the drive status of the electrical pump motor 33 (that is, the actual current value Ib and the actual motor rotation speed N) detected by the ammeter 112 and the position detecting circuit 113; and the automatic stop control determining section 103 for determining whether execution of the engine automatic stop control is permitted or not on the basis of the determination result of the determining section 102. Since the drive source stop control device for the vehicle according to the present invention is configured as described above, by determining whether the necessary hydraulic pressure can be applied to the hydraulic control circuit 30 and the automatic transmission 4 from the electrical oil pump 32 during the automatic stop of the engine 1 or not on the basis of the drive status of the electrical pump motor 33 against the drive command (torque command value or indicated value of the drive current) from the electronic control unit 10 and the pump electronic control unit 11, it is possible to appropriately determine availability of execution of the engine automatic stop control on the basis of the determination result. Therefore, for example, even though the predetermined conditions are met when application failure of the hydraulic pressure to the hydraulic control circuit 30 due to causes other than causes such as deterioration of the electrical pump motor 33 or the electrical oil pump 32 and an accumulated load thereof (for example, clogging or leak of the oil passage route, fixation of any of the group of valves 42 or the check valve 44 in the hydraulic control circuit 30, and the like) is detected, it is possible to appropriately prohibit execution of the automatic stop control for the engine 1.

In the drive source stop control device for the vehicle according to the present invention, in the case where the determining section 102 determines that the necessary hydraulic pressure cannot be applied to the hydraulic control circuit 30 when the engine 1 stops, the automatic stop control determining section 103 may determine that the execution of the engine automatic stop control is prohibited, and the electronic control unit 10 may cause the engine 1 to restart on the basis of determination of prohibition by the engine automatic stop control of the automatic stop control determining section 103 in the case where the engine 1 is caused to stop currently. Thus, even though execution of the engine automatic stop control is started once by control of the electronic control unit 10, the engine automatic stop control can be appropriately stopped due to application failure of the hydraulic pressure to the hydraulic control circuit 30, and the necessary hydraulic pressure can be applied to the hydraulic control circuit 30 via the mechanical oil pump 31.

In the drive source stop control device for the vehicle according to the present invention, the drive source stop control device may further include the oil temperature sensor 34 for detecting the oil temperature Ta of the hydraulic oil. In this case, the pump electronic control unit 11 may determine the current value (indicator current) Ia to be supplied to the electrical pump motor 33 on the basis of the drive command (torque command value) from the electronic control unit 10, and determine the target value (estimated motor rotation speed) M, the upper limit NH and the lower limit NL of the rotation speed of the electrical pump motor 33 on the basis of the oil temperature Ta of the hydraulic oil detected by the oil temperature sensor 34. The drive source stop control device may further include as the drive status detecting section: the ammeter 112 for detecting the actual current value Ib supplied to the electrical pump motor 33; and the position detecting circuit 113 for detecting the actual motor rotation speed N of the electrical pump motor 33. In the case where the actual motor rotation speed N of the electrical pump motor 33 detected by the position detecting circuit 113 exceeds the upper limit NH or falls below the lower limit NL, the determining section 102 may determine that the necessary hydraulic pressure cannot be applied to the hydraulic control circuit 30 from the electrical oil pump 32 during automatic stop of the engine 1, and the automatic stop control determining section 103 may determine that execution of the engine automatic stop control is prohibited. Thus, in the case where an abnormal state such that the actual motor rotation speed N of the electrical oil pump 32 exceeds the upper limit NH (for example, due to leak in the oil passage route at the discharge side of the electrical oil pump 32, fixation at an opened state of each valve, leak or clogging in the oil passage route at the intake side of the electrical oil pump 32 and the like) or an abnormal state such that the actual motor rotation speed N of the electrical oil pump 32 falls below the lower limit NL (for example, due to clogging in the oil passage route at the discharge side of the electrical oil pump 32, fixation at a closed state of each valve (including the check valve 44), deterioration (mechanical loss) of the electrical oil pump 32, deterioration (demagnetization) of the magnetic material and the like) occurs, execution of the engine automatic stop control can be prohibited appropriately even though predetermined conditions are met.

In the drive source stop control device for the vehicle according to the present invention, the electrical pump motor 33 may be controlled to operate by means of control of the pump electronic control unit 11 when the ignition key 23 of the hybrid vehicle is turned Off after the automatic stop control determining section 103 determines that execution of the engine automatic stop control is prohibited; the ammeter 112 and the position detecting circuit 113 may detect the drive status (that is, the actual current Ib and the actual motor rotation speed N) of the electrical pump motor 33 at this time; and the determining section 102 may again determine whether the necessary hydraulic pressure can be applied to the hydraulic control circuit 30 from the electrical oil pump 32 during automatic stop of the engine 1 or not on the basis of the drive status of the electrical pump motor 33. Thus, when execution of the engine automatic stop control is prohibited by the automatic stop control determining section 103 before the ignition key 23 of the vehicle is turned Off and the electronic control unit 10 and the pump electronic control unit 11 thereby become the sleep state, the determining section 102 may carry out next determination. In the case where the prohibition can be released on the basis of this determination result, execution of the engine automatic stop control is permitted by meeting predetermined conditions when the ignition key 23 is turned On next time. For example, in the case where drive of the mechanical oil pump 31 resolves leak or clogging due to fixation of any shift valve of the group of valves 42 or the check valve 44, it is possible to carry out the engine automatic stop control since a next DC (drive cycle). This makes it possible to improve fuel economy of the vehicle, and to save many steps of maintenance and the like for the vehicle.

In the drive source stop control device for the vehicle according to the present invention, in the case where the determining section 102 determines that the necessary hydraulic pressure can be applied to the hydraulic control circuit 30 from the electrical oil pump 32 during automatic stop of the engine 1 in the next determination, the automatic stop control determining section 103 may determine that execution of the engine automatic stop control is permitted when the ignition key 23 is turned On next time. In the case where the determining section 102 also determines that the necessary hydraulic pressure cannot be applied to the hydraulic control circuit 30 from the electrical oil pump 32 in the next determination, the automatic stop control determining section 103 may determine that execution of the engine automatic stop control is prohibited when the ignition key 23 is turned On next time. Thus, in the case where the abnormal state is resolved in the next determination, execution of the engine automatic stop control can be permitted in the next DC (drive cycle). In the case where the abnormal state has not been resolved in the next determination, execution of the engine automatic stop control can also be prohibited in subsequent DCS (drive cycles). In this regard, in the case where the abnormal state has not been resolved, maintenance for the vehicle or the like is required. Therefore, the user (driver) may be informed that effect (that is, that effect may be alerted to the user).

As described above, although the embodiment of the drive source stop control device for the vehicle according to the present invention has been explained in detail on the basis of the appending drawings, the present invention is not limited to these configurations. Various modifications can be made in a scope of the technical idea described in the following claims, the specification described above and the appending drawings without departing from the scope of the present invention. In this regard, even any shape, structure or function that is not described directly in the specification and the drawings falls within the technical idea of the present invention so long as the function and the effect of the present invention are achieved. Namely, each component constituting the electronic control unit 10 and the pump electronic control unit 11 can be replaced with any arbitrary component that can achieve the similar function to the corresponding component of the drive source stop control device for the vehicle. Further, arbitrary components may be added to the drive source stop control device for the vehicle.

In this regard, in the embodiment described above, it has been explained that, in order to drive the electrical pump motor 33, the torque command value is outputted from the electronic control unit 10 and the electrical pump motor 33 is driven by carrying out pulse-width modulation control in accordance with the torque command value by means of the pump electronic control unit 11. However, the present invention is not limited to such a configuration. The electronic control unit 10 may output the command value for current directly, for example.

**Claims**

1.   A drive source stop control device for a vehicle, comprising:

a drive source (1) for causing a vehicle to drive;
a mechanical oil pump (31) driven by the drive source;
an electrical motor (33) operated by a battery;
an electrical oil pump (32) driven by the electrical motor (33);
a transmission gear mechanism (4) that sets up a gear by means of hydraulic oil supplied from the mechanical oil pump (31) and the electrical oil pump (32) and changes rotary driving force of the drive source (1) to be transmitted to drive wheels (6);
a motor control device (11) for controlling and causing the electrical motor (33) to operate; and
a drive source/transmission gear mechanism control section (10) for controlling each of the drive source and the transmission gear mechanism,
wherein, in the case where predetermined conditions are met and the vehicle stops, drive source automatic stop control for causing the drive source (1) to stop is carried out,

the drive source stop control device further comprises:

a drive status detecting section (112, 113) for detecting a drive status of the electrical motor (33) in accordance with a drive command from the drive source/transmission gear mechanism control section (10); **characterized in that**:

the drive status detecting section (112, 113) includes:

a current value detecting section (112) for detecting a current value supplied to the electrical motor (33); and a rotation speed detecting section (113) for detecting rotation speed of the electrical motor (33), wherein the drive source stop control further comprises:

a determining section (102) for determining before an automatic stop of the drive source (1) whether necessary hydraulic pressure could be applied to the transmission gear mechanism (4) from the electrical oil pump (32) during automatic stop of the drive source (1) or not on the basis of the drive status of the electrical motor (33) detected by the drive status detecting section(112, 113); and an automatic stop control determining section (103) for determining whether execution of the drive source (1) automatic stop control is permitted or not on the basis of a determination result of the determining section (102).

2. The drive source stop control device for the vehicle as claimed in claim 1, wherein, in the case where the determining section (102) determines that the necessary hydraulic pressure could not be applied to the transmission gear mechanism (4), the automatic stop control determining section (103) determines that the execution of the drive source automatic stop control is to be prohibited, and the drive source/transmission gear mechanism control section (10) causes the drive source (1) to restart on the basis of determination of prohibition by the automatic stop control determining section (103) in the case where the drive source is caused to stop.

3. The drive source stop control device for the vehicle as claimed in claim 1 or 2, further comprising:

a current value determining section (101) for determining a current value to be supplied to the electrical motor (33) on the basis of the drive command from the drive source/transmission gear mechanism control section (10); an oil temperature sensor for detecting oil temperature of the hydraulic oil; and a rotation speed determining section (101) for determining a target value, an upper limit and a lower limit of rotation speed of the electrical motor (33) on the basis of the oil temperature of the hydraulic oil detected by the oil temperature sensor, wherein the drive status detecting section (112, 113) includes:

a current value detecting section (112) for detecting a current value supplied to the electrical motor (33); and a rotation speed detecting section (113) for detecting rotation speed of the electrical motor (33), and wherein, in the case where the rotation speed of the electrical motor (33) detected by the rotation speed detecting section (113) exceeds the upper limit or falls below the lower limit, the determining section (102) determines that the necessary hydraulic pressure could not be applied to the transmission gear mechanism (4) and the automatic stop control determining section (103) determines that the execution of the drive source automatic stop control is prohibited.

4. The drive source stop control device for the vehicle as claimed in any one of claims 1 to 3, wherein the electrical motor (33) is controlled to operate by means of control of the motor control device when an ignition key (23) of the vehicle is turned Off after the automatic stop control determining section (103) determines that the execution of the drive source automatic stop control is prohibited, and wherein the drive status detecting section (112, 113) detects the drive status of the electrical motor (33) at this time and the determining section (102) again determines whether the necessary hydraulic pressure could be applied to the transmission gear mechanism (4) or not on the basis of the detected drive status of the electrical motor (33).

5. The drive source stop control device for the vehicle as claimed in claim 4, wherein, in the case where the determining section (102) determines that the necessary hydraulic pressure could be applied to the transmission gear mechanism (4) from the electrical, oil pump (32) in the next determination, the automatic stop control determining section (103) determines that execution of the drive source automatic stop control is permitted when the ignition key (23) is turned On next time, and wherein, in the case where the determining section (102) determines that the necessary hydraulic pressure could not bbe applied to the transmission gear mechanism (4) from the electrical oil pump (32) in the next determination, the automatic stop control determining section (103) determines that execution of the drive source automatic stop control is prohibited when the ignition key (23) is turned On next time.

**Patentansprüche**

1. Antriebsquellen-Anhaltesteuerungsvorrichtung für ein Fahrzeug, aufweisend:

   eine Antriebsquelle (1), um zu bewirken, dass ein Fahrzeug fährt;
   eine mechanische Ölpumpe (31), die durch die Antriebsquelle angetrieben wird;
   einen Elektromotor (33), der von einer Batterie betrieben wird;
   eine elektrische Ölpumpe (32), die durch den Elektromotor (33) angetrieben wird;
   einen Getriebemechanismus (4), der eine Gangstufe mittels eines Hydrauliköls einstellt, das von der mechanischen Ölpumpe (31) und der elektrischen Ölpumpe (32) zugeführt wird und die drehende Antriebskraft der Antriebsquelle (1), die an die Räder (6) übertragen werden soll, ändert;
   eine Motorsteuerungsvorrichtung (11) zum Steuern und Bewirken, dass der Elektromotor (33) arbeitet; ein Antriebsquellen-/Getriebemechanismus-Steuerungsabschnitt (10) zum Steuern sowohl der Antriebsquelle als auch des Getriebemechanismus,
   wobei, in dem Fall, in dem vorbestimmte Bedingungen erfüllt werden und das Fahrzeug anhält, eine automatische Antriebsquelle-Anhaltesteuerung ausgeführt wird, um zu bewirken, dass die Antriebsquelle (1) anhält, wobei die Antriebsquellen-Anhaltesteuerungvorrichtung außerdem aufweist:

   einen Antriebszustands-Erkennungsabschnitt (112, 113) zum Erkennen eines Antriebszustands des Elektromotors (33) in Übereinstimmung mit einem Antriebsbefehl von dem Antriebsquellen-/Getriebemechanismus-Steuerungsabschnitt (10);
   **dadurch gekennzeichnet, dass**
   der Antreibszustand-Erkennungsabschnitt (112, 113) aufweist:

   einen Momentanwert-Erkennungsabschnitt (112) zum Erkennen eines momentanen Werts, der dem Elektromotor (33) zugeführt wird; und
   einen Drehzahl-Erkennungsabschnitt (113) zum Erkennen einer Drehzahl des Elektromotors (33),
   wobei die Antriebsquellen-Anhaltesteuerung außerdem aufweist:

   einen Erkennungsabschnitt (102) um vor einem automatischen Anhalten der Antriebsquelle (1) zu erkennen, ob der erforderliche Hydraulikdruck auf den Getriebemechanismus (4) von der elektrischen Ölpumpe (32) während des automatischen Anhaltens der Antriebsquelle (1) angewendet werden kann oder nicht, auf der Basis des Antriebszustands des Elektromotors (33), der durch den Antriebszustands-Erkennungsabschnitt (112, 113) erkannt wird; und
   einen Erkennungsabschnitt (103) der automatischen Anhaltesteuerung zum Erkennen, ob das Ausführen einer automatischen Antriebsquellen (1)-Anhaltesteuerung erlaubt ist oder nicht auf der Basis eines Erkennungsergebnisses des Erkennungsabschnitts (102).

2. Antriebsquellen-Anhaltesteuerungsvorrichtung für das Fahrzeug, wie in Anspruch 1 beansprucht,
   wobei, in dem Fall, in dem der Erkennungsabschnitt (102) erkennt, dass der erforderliche Hydraulikdruck nicht dem Getriebemechanismus (4) zugeführt werden kann, der Erkennungsabschnitt (103) für die automatische Anhaltesteuerung erkennt, dass die Ausführung der automatischen Antriebsquellen-Anhaltesteuerung verboten werden muss und der Antriebsquellen-/Getriebemechanismus-Steuerungsabschnitt (10) die Antriebsquelle (1) veranlasst, auf Basis der Erkennung des Verbietens durch den automatische Anhaltensteuerung-Erkennungsabschnitt (103) die Antriebsquelle erneut zu starten, in dem Fall, indem die Antriebsquelle veranlasst wurde anzuhalten.

3. Antriebsquellen-Anhaltesteuerungsvorrichtung für das Fahrzeug wie in Anspruch 1 oder 2 beansprucht, weiterhin aufweisend:

   einen Momentanwert-Erkennungsabschnitt (101) zum Erkennen eines Momentanwerts der dem Elektromotor (33) zuzuführen ist, auf der Basis eines Antriebsbefehls von dem Antriebsquellen-/Getriebemechanismus-Steuerungsabschnitt (10);
   einen Öltemperatursensor zum Erkennen einer Öltemperatur des Hydrauliköls; und

**EP 2 322 399 B1**

einen Drehzahl-Erkennungsabschnitt (113) zum Erkennen eines Zielwerts eines oberen Limits und eines unteren Limits der Drehzahl des Elektromotors (33) auf der Basis der Öltemperatur des Hydrauliköls, die durch den Öltemperatursensor erkannt wurde,

wobei der Antriebszustand-Erkennungsabschnitt (112, 113) beinhaltet:

einen Momentanwert-Erkennungsabschnitt (112) zum Erkennen eines Momentanwerts, der dem Elektromotor (33) zugeführt wird; und

einen Drehzahl-Erkennungsabschnitt (113) zum Erkennen einer Drehzahl des Elektromotors (33) und wobei, in dem Fall, in dem die Drehzahl des Elektromotors (33), die von dem Drehzahl-Erkennungsabschnitt (113) erkannt wird, das obere Limit übersteigt oder unter das untere Limit fällt, deren Ermittlungsabschnitt (102) ermittelt, dass der erforderliche Hydraulikdruck nicht dem Getriebemechanismus (4) zugeführt werden konnte und der Ermittlungsabschnitt (103) der automatischen Anhaltesteuerung ermittelt, dass die Ausführung der automatisch Antriebsquellen-Anhaltesteuerung verhindert ist.

4. Antriebsquellen-Anhaltesteuerungsvorrichtung für ein Fahrzeug wie in einem der Ansprüche 1 bis 3 beansprucht, wobei der Elektromotor (33) gesteuert ist, um mittels einer Steuerung der Motorssteuerungsvorrichtung betrieben zu werden, wenn ein Zündschlüssel (23) des Fahrzeugs auf AUS gedreht wird, nachdem der Ermittlungsabschnitt (103) für die automatische Anhaltesteuerung ermittelt, dass die Ausführung der automatischen Antriebsquellen-Anhaltesteuerung verhindert ist, und

wobei der Antriebszustand-Erkennungsabschnitt (112, 113) den Antriebszustand des Elektromotors (33) zu dieser Zeit ermittelt und der Ermittlungsabschnitt (102) wieder ermittelt, ob der erforderliche Öldruck dem Getriebemechanismus (4) zugeführt werden konnte oder nicht auf Basis des ermittelten Antriebszustands des Elektromotors (33).

5. Antriebsquellen-Anhaltesteuerungvorrichtung für ein Fahrzeug wie in Anspruch 4 beansprucht, wobei, in dem Fall, in dem der Ermittlungsabschnitt (102) ermittelt, dass der erforderliche Hydraulikdruck dem Getriebemechanismus (4) von der elektrischen Ölpumpe (32) in der nächsten Ermittlung zugeführt werden konnte, der Ermittlungsabschnitt (103) für die automatische Anhaltesteuerung ermittelt, dass die Ausführung der automatischen Antriebsquellen-Anhaltesteuerung erlaubt ist, wenn der Zündschlüssel (23) das nächste Mal auf AN gedreht wird, und

wobei in dem Fall, in dem der Ermittlungsabschnitt (102) ermittelt, dass der erforderliche Hydraulikdruck dem Getriebemechanismus (4) von der elektrischen Ölpumpe (32) in der nächsten Ermittlung nicht zugeführt werden konnte, der Ermittlungsabschnitt (103), der automatischen Anhaltesteuerung ermittelt, dass die Ausführung der automatischen Antriebsquellen-Anhaltesteuerung verhindert ist, wenn der Zündschlüssel (23) das nächste Mal auf AN gedreht wird.

**Revendications**

1. Dispositif de commande de l'arrêt de la source d'entraînement pour un véhicule, comprenant : une source d'entraînement (1) pour entraîner un véhicule à rouler ; une pompe à huile mécanique (31) entraînée par la source d'entraînement ; un moteur électrique (33) actionné par une batterie ; une pompe à huile électrique (32) entraînée par le moteur électrique (33) ; un mécanisme de transmission à engrenages (4) qui établit un engrenage au moyen d'huile hydraulique fournie depuis la pompe à huile mécanique (31) et la pompe à huile électrique (32) et modifie la force d'entraînement rotative de la source d'entraînement (1) devant être transmise à des roues motrices (6) ; un dispositif de commande du moteur (11) destiné à commander et à causer le fonctionnement du moteur électrique (33) ; et une section de commande (10) de la source d'entraînement / du mécanisme de transmission à engrenages destinée à commander chacun de la source d'entraînement et du mécanisme de transmission à engrenages, dans lequel, dans le cas où des conditions prédéterminées sont satisfaites et où le véhicule s'arrête, une commande de l'arrêt automatique de la source d'entraînement destinée à causer l'arrêt de la source d'entraînement (1) est effectuée, le dispositif de commande de l'arrêt de la source d'entraînement comprend en outre : une section de détection de l'état d'entraînement (112, 113) pour détecter un état d'entraînement du moteur électrique (33) conformément à une instruction d'entraînement provenant de la section de commande (10) de la source d'entraînement / du mécanisme de transmission à engrenages ; **caractérisé en ce que** la section de détection d'état d'entraînement (112, 113) comprend : une section de détection de la valeur actuelle (112) pour détecter une valeur actuelle fournie au moteur électrique (33) ; et une section de détection de la vitesse de rotation (113) pour détecter la vitesse de rotation du moteur électrique (33), dans lequel la commande de l'arrêt de la source d'entraînement comprend en outre : une section de détermination (102) pour déterminer, avant un arrêt automatique de la source d'entraînement (1), si la pression hydraulique nécessaire pourrait ou non être appliquée au mécanisme de transmission à engrenages (4) depuis la pompe à huile électrique (32) pendant l'arrêt automatique de la source d'entraînement (1) d'après l'état d'entraînement du moteur électrique (33), détecté par la section de détection d'état d'entraînement (112, 113) ; et une section de détermination de la commande d'arrêt automatique (103) pour déterminer si l'exécution de la commande d'arrêt automatique de la source d'entraînement (1) est permise ou non d'après un résultat de détermination de la section de détermination (102).

2. Dispositif de commande de l'arrêt de la source d'entraînement pour le véhicule selon la revendication 1, dans lequel, dans le cas où la section de détermination (102) détermine que la pression hydraulique nécessaire ne pourrait pas être appliquée au mécanisme de transmission à engrenages (4), la section de détermination de la commande d'arrêt automatique (103) détermine que l'exécution de la commande d'arrêt automatique de la source d'entraînement doit être interdite, et la section de commande (10) de la source d'entraînement / du mécanisme de transmission à engrenages cause le redémarrage de la source d'entraînement (1) d'après la détermination de l'interdiction par la section de détermination de la commande d'arrêt automatique (103) dans le cas où la source d'entraînement est amenée à s'arrêter.

3. Dispositif de commande de l'arrêt de la source d'entraînement pour le véhicule selon la revendication 1 ou 2, comprenant en outre : une section de détermination de la valeur actuelle (101) pour déterminer une valeur actuelle devant être fournie au moteur électrique (33) d'après l'instruction d'entraînement provenant de la section de commande (10) de la source d'entraînement / du mécanisme de transmission à engrenages ; un détecteur de température d'huile pour détecter la température d'huile de l'huile hydraulique ; et une section de détermination de la vitesse de rotation (101) pour déterminer une valeur cible, une limite supérieure et une limite inférieure de la vitesse de rotation du moteur électrique (33) d'après la température d'huile de l'huile hydraulique détectée par le détecteur de température d'huile,
dans lequel la section de détection de l'état d'entraînement (112, 113) comprend :

une section de détection de valeur actuelle (112) pour détecter une valeur actuelle fournie au moteur électrique (33) ; et une section de détection de vitesse de rotation (113) pour détecter la vitesse de rotation du moteur électrique (33), et
dans lequel, dans le cas où la vitesse de rotation du moteur électrique (33), détectée par la section de détection de la vitesse de rotation (113), dépasse la limite supérieure ou chute au-dessous de la limite inférieure, la section de détermination (102) détermine que la pression hydraulique nécessaire ne pourrait pas être appliquée au mécanisme de transmission à engrenages (4) et la section de détermination de la commande d'arrêt automatique (103) détermine que l'exécution de la commande d'arrêt automatique de la source d'entraînement est interdite.

4. Dispositif de commande de l'arrêt de la source d'entraînement pour le véhicule selon l'une quelconque des revendications 1 à 3, dans lequel le moteur électrique (33) est commandé pour fonctionner au moyen de la commande du dispositif de commande du moteur lorsqu'une clé de contact (23) du véhicule est tournée sur ARRÊT après que la section de détermination de la commande d'arrêt automatique (103) détermine que l'exécution de la commande d'arrêt automatique de la source d'entraînement est interdite, et
dans lequel la section de détection d'état d'entraînement (112, 113) détecte l'état d'entraînement du moteur électrique (33) à ce moment-là et la section de détermination (102) détermine à nouveau si la pression hydraulique nécessaire pourrait ou non être appliquée au mécanisme de transmission à engrenages (4) d'après l'état d'entraînement détecté du moteur électrique (33).

5. Dispositif de commande de l'arrêt de la source d'entraînement pour le véhicule selon la revendication 4, dans lequel, dans le cas où la section de détermination (102) détermine que la pression hydraulique nécessaire pourrait être appliquée au mécanisme de transmission à engrenages (4) depuis la pompe à huile électrique (32) dans la détermination suivante, la section de détermination de la commande d'arrêt automatique (103) détermine que l'exécution de la commande d'arrêt automatique de la source d'entraînement est permise lorsque la clé de contact (23) est tournée sur MARCHE la fois suivante, et
dans lequel, dans le cas où la section de détermination (102) détermine que la pression hydraulique nécessaire ne pourrait pas être appliquée au mécanisme de transmission à engrenages (4) depuis la pompe à huile électrique (32) dans la détermination suivante, la section de détermination de la commande d'arrêt automatique (103) détermine que l'exécution de la commande d'arrêt automatique de la source d'entraînement est interdite lorsque la clé de contact (23) est tournée sur MARCHE la fois suivante.

FIG. 1

EP 2 322 399 B1

FIG. 2

ENGINE 1

MOP 31

Ta 34

HYDRAULIC CONTROL CIRCUIT 30

EOP 32

ELECTRICAL PUMP MOTOR 33

POSITION DETECTING CIRCUIT 113

OP-ECU 11

MOTOR DRIVER 12

A 112

CONTROL SECTION 111

ECU 10

AUTOMATIC STOP CONTROL DETERMINING SECTION 103

CONTROL SECTION 101

DETERMINATION SECTION 102

MEMORY 104

FIG. 3

FIG. 4

FIG. 5

ENGINE AUTOMATIC STOP
AVAILABILITY DETERMINING PROCESS

S101 — **IG OFF?** — YES → ( 1 )

NO

**READ OUT FROM MEMORY** — S102

S103 — **PERMISSION FOR ENGINE AUTOMATIC STOP CONTROL?** — NO

S104 — YES → **COMMAND FOR PERMITTING IGSW IL**

S105 → **COMMAND FOR NOT PERMITTING IGSW IL**

S106 — **CONDITIONS FOR ENGINE AUTOMATIC STOP CONTROL ARE MET?** — NO

YES

**STOP ENGINE AND OUTPUT TORQUE COMMAND VALUE** — S107

**RECEIVE ACTUAL CURRENT VALUE AND ACTUAL ROTATION SPEED** — S108

S109 — **TORQUE COMMAND VALUE = ACTUAL TORQUE?** — NO

YES

S110 — **INDICATOR CURRENT VALUE = ACTUAL CURRENT VALUE?** — NO

YES

S111 — **ACQUIRE TEMPERATURE OF HYDRAULIC OIL**

S112 — **READ OUT ROTATION NUMBER THRESHOLD**

YES ← **ACTUAL ROTATION SPEED > UPPER LIMIT?** — S113

NO

S116 — YES ← **ACTUAL ROTATION SPEED < LOWER LIMIT?** — S114

NO

**PROHIBIT ENGINE AUTOMATIC STOP CONTROL**

S117 — **HOLD PROHIBITION IN MEMORY**

S118 — **INSTRUCT TO NOT PERMIT IGSW IL**

**PERMIT ENGINE AUTOMATIC STOP CONTROL** — S115

END

FIG. 6

S119

```
                              ( 1 )
                                │
                                ▼
          ┌──────────────────────────────────────┐  NO
        ◄─┤  ENGINE AUTOMATIC STOP                 ├──────►
          │  CONTROL IS PROHIBITED?                │
          └──────────────────────────────────────┘
                            │ YES                    S120
                            ▼
          ┌──────────────────────────────────────┐
          │  OUTPUT TORQUE COMMAND VALUE           │
          └──────────────────────────────────────┘
                            │                        S121
                            ▼
          ┌──────────────────────────────────────┐
          │  RECEIVE ACTUAL CURRENT VALUE          │
          │  AND ACTUAL ROTATION SPEED             │
          └──────────────────────────────────────┘
```

S122

```
          ┌──────────────────────────────────────┐  NO
          │  TORQUE COMMAND VALUE                  ├──────►
          │  = ACTUAL TORQUE?                      │
          └──────────────────────────────────────┘
                            │ YES
```

S123

```
          ┌──────────────────────────────────────┐  NO
          │  INDICATOR CURRENT VALUE               ├──────►
          │  = ACTUAL CURRENT VALUE?               │
          └──────────────────────────────────────┘
                            │ YES
                            ▼
          ┌──────────────────────────────────────┐  S124
          │  DETECT TEMPERATURE                    │
          │  OF HYDRAULIC OIL                      │
          └──────────────────────────────────────┘
                            │                        S125
                            ▼
          ┌──────────────────────────────────────┐
          │  READ OUT ROTATION                     │
          │  NUMBER THRESHOLD                      │
          └──────────────────────────────────────┘
                            │                        S126
                            ▼
     YES  ┌──────────────────────────────────────┐
   ◄──────┤  ACTUAL ROTATION SPEED                 │
          │  > UPPER LIMIT?                        │
          └──────────────────────────────────────┘
                            │ NO                     S127
                            ▼
     YES  ┌──────────────────────────────────────┐
   ◄──────┤  ACTUAL ROTATION SPEED                 │
          │  < LOWER LIMIT?                        │
          └──────────────────────────────────────┘
                            │ NO                     S128
```

S129

```
   ┌──────────────────┐        ┌──────────────────────────┐
   │  PROHIBIT ENGINE │        │  PERMIT ENGINE AUTOMATIC   │
   │  AUTOMATIC STOP  │        │  STOP CONTROL              │
   │  CONTROL         │        └──────────────────────────┘
   └──────────────────┘
```

S130

```
   ┌──────────────────┐
   │  HOLD PROHIBITION │
   │  IN MEMORY        │
   └──────────────────┘
                            │                        S131
                            ▼
          ┌──────────────────────────────────────┐
          │  INFORM TERMINATION                    │
          │  OF DETERMINATION                      │
          └──────────────────────────────────────┘
```

S132

```
                            ▼
          ┌──────────────────────────────────────┐
          │  SHIFT TO SLEEP STATE                  │
          └──────────────────────────────────────┘
                            │
                            ▼
                       (  END  )
```

FIG. 7

**EP 2 322 399 B1**

### Patent documents cited in the description

- JP 2000045807 A
- JP 2000230442 A
- US 2004029677 A1